# FASCICULE DE BREVET EUROPEEN

(11) **EP 0 679 544 B1**
(45) Date de publication et mention de la délivrance du brevet: **16.12.1998**
(21) Numéro de dépôt: 95400879.3
(22) Date de dépôt: 20.04.1995
(51) Int. Cl.: B60C 17/06

(54) **Dispositif de roulage à plat pour véhicule automobile**
Notlaufvorrichtung für Auto
Run-flat device for vehicle

(30) Priorité: 27.04.1994 FR 9405101
(43) Date de publication de la demande: 02.11.1995
(73) Titulaire: HUTCHINSON, F-75008 Paris (FR)
(72) Inventeur: Boni, Bernard, F-95430 Butry (FR); Riquier, Didier, F-95340 Persan (FR); Seradarian, Pascal, Lawrenceville N.J. 08648 (US)
(74) Mandataire: Ramey, Daniel

(56) Documents cités:
- EP-A- 0 100 013
- EP-A- 0 142 844
- EP-A- 0 211 499
- DE-A- 4 008 513
- FR-A- 2 516 868
- GB-A- 2 084 088
- LU-A- 68 367

## Description

L'invention concerne un dispositif de roulage à plat pour véhicule automobile, notamment pour un véhicule de tourisme, équipé de pneumatiques sans chambre à air.

On connaît déjà de nombreux dispositifs de roulage à plat, dont certains ont été développés pour équiper des véhicules blindés ou des véhicules à usage militaire et sont efficaces, mais de structure complexe, lourde et coûteuse, et dont d'autres sont beaucoup plus simples, mais peu efficaces dans la mesure où la distance que l'on peut parcourir avec une roue à plat est très faible, le roulage à plat se traduisant par la destruction du pneumatique au bout de quelques kilomètres.

On connaît également, par les documents FR-A-2 516 868, LU-A-68 367 et EP-A-0 142 844, des dispositifs de roulage à plat pour véhicule automobile, tel en particulier qu'un véhicule de tourisme, comprenant pour chaque roue un anneau rigide monté sur la jante de la roue et comprenant un rebord périphérique s'étendant vers le flanc extérieur du pneumatique sur une distance suffisante pour former une butée s'opposant au déchaussage du pneumatique en cas de roulage à plat ou avec un pneumatique insuffisamment gonflé.

L'invention a pour but de réaliser un dispositif de roulage à plat avec une structure très simple, légère et peu coûteuse, mais présentant une efficacité de très loin supérieure à celle des dispositifs connus, en permettant par exemple de parcourir avec une roue à plat une distance supérieure à 100 ou 150 kilomètres, à vitesse élevée et dans les conditions normales de conduite d'un véhicule de tourisme.

Elle propose un dispositif de roulage à plat pour véhicule automobile, tel en particulier qu'un véhicule de tourisme, dont les roues sont équipées de pneumatiques sans chambre à air, ce dispositif comprenant pour chaque roue un anneau rigide constitué d'un ou de plusieurs secteurs en arc de cercle dont les extrémités sont raccordées bout à bout par des moyens de liaison et de serrage sur la jante de la roue et comprenant un rebord périphérique s'étendant vers le flanc extérieur du pneumatique sur une distance suffisante pour former une butée s'opposant au déchaussage du pneumatique en cas de roulage à plat ou avec un pneumatique insuffisamment gonflé, caractérisé en ce que le ou chaque secteur est une pièce pleine et monobloc réalisée en résine thermoplastique armée ayant un coefficient de dilatation thermique sensiblement égal à celui de la jante, et dont la base appliquée sur la jante comporte un rebord annulaire dont la forme correspond à celle d'un puits ou d'un creux de jante, de sorte que le serrage de l'anneau sur la jante assure également son maintien en direction axiale.

Ce dispositif présente de nombreux avantages :
- il est très léger et le poids total de quatre dispositifs équipant les quatre roues d'un véhicule automobile est largement inférieur à celui d'une roue de secours,
- son montage sur une roue est simple et rapide et ne nécessite pas d'outillage particulier,
- il permet de parcourir avec une roue à plat une distance supérieure à 100-150 kilomètres à vitesse élevée dans des conditions normales de conduite.

En fait, le dispositif selon l'invention s'est révélé être d'une efficacité telle que le conducteur du véhicule ne s aperçoit en général pas qu'il roule avec une roue à plat.

Il est donc avantageux de prévoir au moins un élément rapporté en saillie sur la surface périphérique extérieure de l'anneau, cet ou ces éléments jouant un rôle d'avertisseur de roulage à plat ou de sous-gonflage à chaque tour de roue.

En variante, on peut bien entendu utiliser d'autres moyens, tels par exemple qu'un capteur de pression monté dans la roue et associé à un circuit d'alarme ou de signalisation, pour prévenir le conducteur que la pression de gonflage du pneumatique est tombée en dessous d'une valeur limite prédéterminée.

Dans une première forme de réalisation de l'invention, le dispositif est constitué d'un anneau fendu en un point de sa périphérie et dont les extrémités en regard sont raccordées par des moyens de serrage par exemple du type vis-écrou.

Dans une autre forme de réalisation de l'invention, ce dispositif est constitué de deux secteurs ou demi-anneaux ayant chacun une étendue angulaire de 180°, raccordés bout à bout par des moyens de serrage, par exemple du type vis-écrou.

Avantageusement, l'anneau ou chaque secteur ou demi-anneau est à section évolutive, l'épaisseur de la partie médiane de sa section étant plus importante aux extrémités de l'anneau ou du demi-anneau que vers le milieu de celui-ci.

De préférence, l'anneau ou chaque secteur ou demi-anneau est réalisé par moulage en polyamide chargé de fibres de verre longues, le polyamide utilisé étant de préférence celui commercialisé sous la marque NYRIM.

Dans une variante de réalisation de l'invention, la surface périphérique radialement extérieure de l'anneau ou de chaque secteur ou demi-anneau est recouverte d'une couche surmoulée d'élastomère.

Cela permet d'amortir d'éventuels chocs entre l'anneau et le pneumatique, que celui-ci soit gonflé normalement ou plus ou moins dégonflé, et donc de protéger le pneumatique et de prolonger sa durée de vie.

Enfin, la surface interne du pneumatique comporte, en regard de la surface périphérique externe de l'anneau, une couche de lubrifiant, par exemple sous forme d'un gel très visqueux, ayant un point de fusion très élevé.

Cette couche de lubrifiant permet d'éviter l'échauffement et la destruction du pneumatique qui seraient autrement provoqués par le différentiel de vitesse tangentielle entre sa surface interne et la surface périphérique externe de l'anneau.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 est vue schématique en élévation d'un secteur d'anneau selon l'invention,
les figures 2 à 5 sont des vues en section de ce secteur d'anneau selon les lignes II-II, III-III, IV-IV et V-V respectivement de la figure 1;
la figure 6 est une vue schématique partielle en coupe transversale d'une roue comportant un dispositif selon l'invention, la coupe étant faite selon la ligne VI-VI de la figure 7;
la figure 7 est une vue partielle en coupe axiale de la roue de la figure 6, la coupe étant faite selon la ligne VII-VII de la figure 6;
la figure 8 est une vue correspondant à la figure 7, mais représentant une variante de réalisation de l'invention;
les figures 9, 10 et 11 représentent des moyens de liaison et de serrage des secteurs d'anneau selon l'invention.
la figure 12 est une vue schématique partielle en coupe axiale d'une roue équipée d'un dispositf selon l'invention et illustre une autre caractéristique de ce dispositif;
la figure 13 est une vue schématique partielle en coupe transversale de la roue de la figure 12.

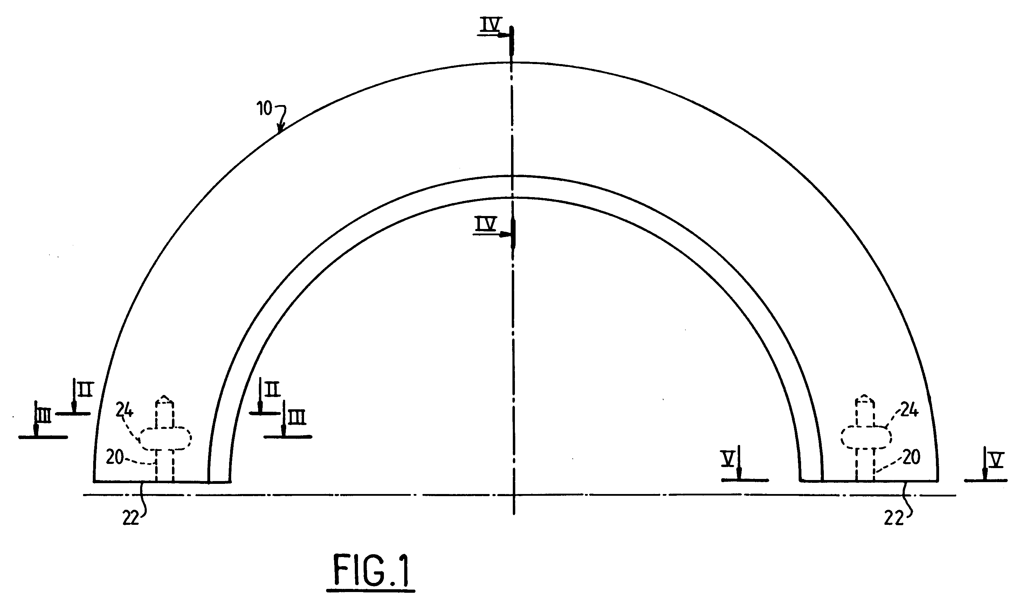

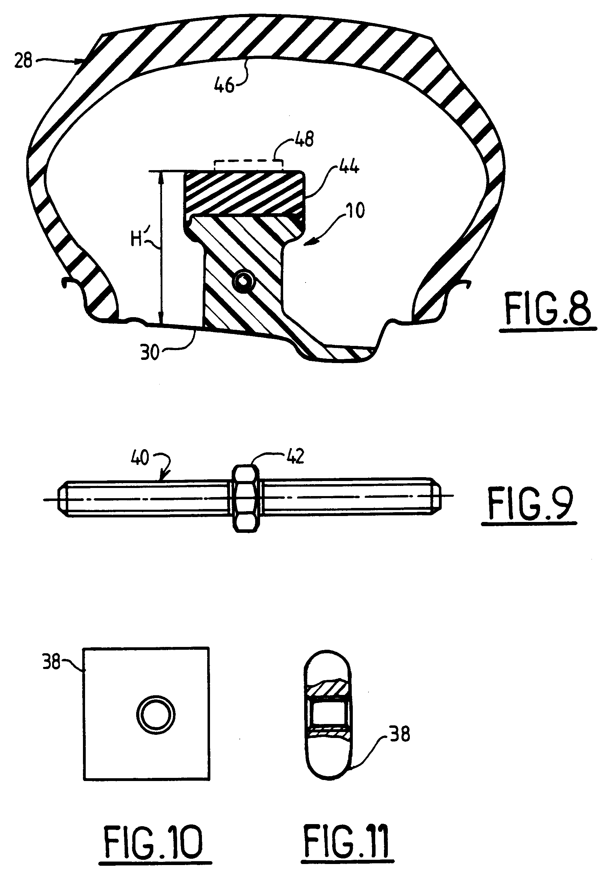

Dans les figures 1 à 5, on a représenté certaines caractéristiques d'un dispositif d'anneau selon l'invention, formé de deux parties identiques (10) en demi-anneau, destinées à être raccordées ensemble bout à bout par les moyens de liaison et de serrage représentés aux figures 9 à 11.

Chaque demi-anneau 10 est une pièce pleine moulée en matière thermoplastique armée, de préférence en un polyamide tel que celui qui est commercialisé sous la marque NYRIM (un "Nylon" destiné à être utilisé par procédé R.I.M.), et qui est chargé de fibres de verre longues.

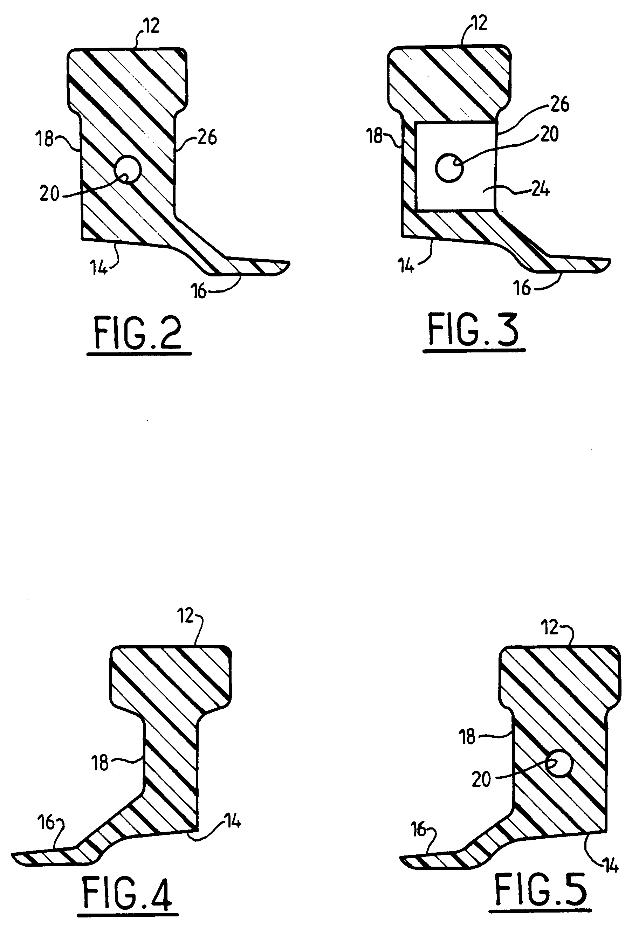

Comme on peut le voir sur les figures 2 à 5, chaque demi-anneau 10 a en section une forme générale de T ou de L dont la barre transversale 12 correspond à la surface périphérique extérieure de l'anneau et constitue une bande de roulement, le demi-anneau comprenant également une base 14, opposée à la barre 12, et destinée à être appliquée et serrée sur une partie de la surface périphérique externe de la jante d'une roue, cette base comportant de moulage un rebord latéral 16 destiné à s'engager dans un creux ou un puits de jante et ayant une forme conjuguée ou complémentaire de celle du creux ou du puits de jante comme on le verra en détail ci-dessous.

La partie 18 de chaque demi-anneau, qui relie la bande de roulement 12 à la base 14 et qui correspond à la barre longitudinale de la section en T ou en L, est d'épaisseur variable le long du demi-anneau, cette épaisseur étant minimale entre les extrémités du demi-anneau et maximale à ses extrémités dans lesquelles sont formés des logements de réception des moyens de liaison et de serrage.

Ces logements comprennent un passage cylindrique borgne 20 formé dans la partie 18 et s'étendant perpendiculairement à la face d'extrémité correspondante 22 du demi-anneau en débouchant sur celle-ci.

Ils comprennent également une chambre 24, formée dans la partie 18 du demi-anneau et débouchant sur la face latérale 26 de celui-ci, sur laquelle est formé le rebord latéral 16.

La chambre 24 est par exemple de section carrée ou polygonale, de façon à pouvoir immobiliser en rotation un écrou de forme correspondante qu'elle est destinée à recevoir.

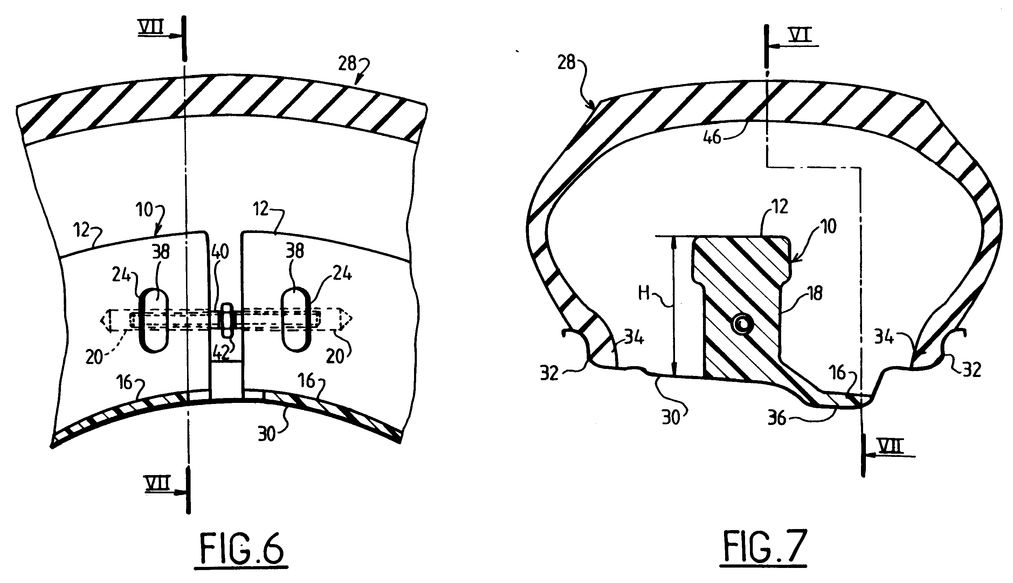

Le montage du dispositif selon l'invention est des plus simples et va maintenant être décrit en référence aux figures 6 et 7 :
un pneumatique 28 est engagé sur la jante 30 d'une roue, cette jante comprenant deux rebords latéraux 32 qui forment des zones de butée et de retenue des talons 34 du pneumatique, ce dernier étant d'abord monté sur la jante de façon à ce qu'un de ses talons se trouve au milieu à peu près de la jante et que son autre talon soit en dehors. On peut alors introduire les deux demi-anneaux 10 à l'intérieur du pneumatique et les disposer autour de la jante, après quoi il faut relier entre elles les extrémités en regard des deux demi-anneaux 10 et serrer l'anneau sur la surface extérieure périphérique de la jante.

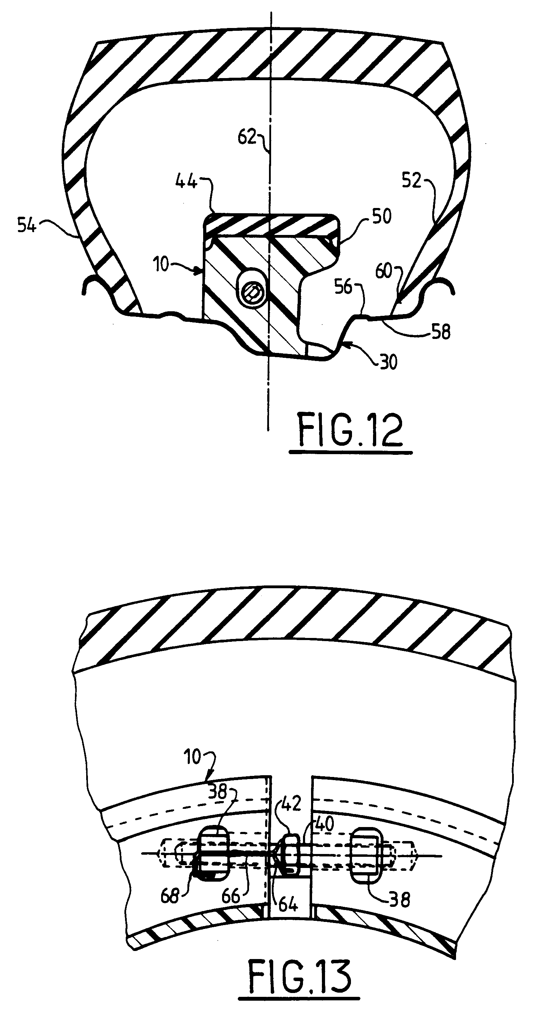

Pour cela, lorsque les deux demi-anneaux 10 sont disposés correctement autour de la jante, les rebords latéraux 16 étant placés dans les creux ou puits de jante 36 destinés à les recevoir comme représenté en figure 7, on place dans les chambres 24 (si ce n'est déjà fait) les écrous 38 représentés aux figures 10 et 11 et on introduit une tige filetée 40 dans les passages cylindriques 20 qui sont alignés face à face, cette tige 40 représentée en figure 9 étant filetée dans le sens direct ou normal sur une moitié de sa longueur et dans le sens inverse sur l'autre moitié de sa longueur et comprenant en son milieu un moyen 42 d'entraînement en rotation, par exemple en forme d'écrou à six pans.

De façon bien connue dans la technique, la rotation de la tige filetée 40 autour de son axe dans un sens provoque par vissage dans les écrous 38 le rapprochement des extrémités en regard des deux demi-anneaux 10, ce qui permet de serrer l'anneau sur la périphérie de la jante 30 et de l'immobiliser en rotation autour de l'axe de la roue. L'engagement du rebord latéral 16 de l'anneau dans le creux ou puits de jante 36 permet d'immobiliser cet anneau en déplacement parallèlement à l'axe de la roue.

Les demi-anneaux 10 sont réalisés en une matière qui est choisie pour avoir un coefficient de dilatation thermique sensiblement égal à celui de la jante 30 (celle-ci étant souvent en aluminium). Ainsi, les variations de température auxquelles peuvent être soumis le dispositif selon l'invention et la jante 30 vont provoquer des dilatations ou des contractions thermiques sensiblement égales qui n'auront pas d'influence sur le serrage du dispositif et son blocage en rotation sur la jante 30.

Les dimensions des demi-anneaux 10 sont déterminées de façon à ce que les flancs du pneumatique 28 ne viennent pas en contact ou en appui sur le sol en cas de roulage à plat. Pour cela, la hauteur H de chaque demi-anneau, c'est-à-dire sa dimension radiale entre la bande de roulement 12 et la base 14 appliquée sur la jante, est au moins égale à 45% de la hauteur interne nominale du pneumatique, et est de préférence égale à 50% de cette hauteur nominale interne.

La largeur de la bande de roulement 12 de l'anneau est, par exemple, de l'ordre de 45 mm, tandis que l'épaisseur de la partie 18 peut varier de 20 ou 25 mm à 35 mm environ le long du demi-anneau.

Le poids total du dispositif qui vient d'être décrit varie entre 2 kg pour un véhicule bas de gamme et 4 kg pour un véhicule haut de gamme, soit de 8 à 16 kg environ pour les quatre roues d'un véhicule automobile en fonction de sa catégorie.

Selon une autre caractéristique de l'invention, représentée en figure 8, la bande de roulement de chaque demi-anneau 10 est constituée d'une couche 44 d'élastomère surmoulée sur la surface périphérique radialement extérieure du demi-anneau, l'élastomère étant par exemple un polyisoprène ayant une dureté Shore A de l'ordre de 70. Cette couche d'élastomère 44 est destinée à amortir les chocs du pneumatique 28 sur le demi-anneau 10 et donc à réduire les risques de détérioration du pneumatique. La hauteur H' de chaque demi-anneau 10 (ou dimension radiale entre la bande de roulement et la base du demi-anneau) est alors de préférence égale à 52% de la hauteur interne nominale du pneumatique.

Dans une variante de réalisation, l'anneau du dispositif selon l'invention est réalisé en une seule pièce fendue en un point de sa périphérie, des moyens de liaison et de serrage par exemple du type vis-écrou étant prévus sur les extrémités en regard de cette pièce. Dans ce cas, l'anneau est monté sur la jante d'une roue par déformation élastique, plus facilement et plus rapidement que dans la réalisation précédente, et son coût est inférieur.

Selon encore une autre caractéristique de l'invention, la surface interne 46 du pneumatique susceptible de venir au contact de la bande de roulement 12, 44 de l'anneau, est revêtue d'une couche d'un lubrifiant tel qu'un gel très visqueux ayant un point de fusion élevé, qui peut être par exemple un polypropylèneglycol commercialisé par la Société TOTAL ou tout autre produit équivalent. Cette couche de lubrifiant permet, en cas de roulage à plat, un glissement de la surface interne du pneumatique sur la bande de roulement du dispositif selon l'invention, du fait de leur différentiel de longueur ou de périmètre, et donc d'éviter un frottement intense sur la surface interne du pneumatique, qui se traduirait par sa destruction relativement rapide.

Comme déjà indiqué, un dispositif selon l'invention permet de parcourir avec une roue à plat une distance importante (supérieure à 100-150 km) à vitesse élevée et sans que le conducteur du véhicule ait conscience de rouler avec une roue à plat. Il est donc souhaitable de l'en avertir et l'on peut pour cela, de façon simple, fixer une petite barrette 48 en saillie sur la face extérieure de la bande de roulement 12 ou 44 du dispositif selon l'invention, par exemple comme indiqué schématiquement en figure 8, cette petite barrette 48 générant du bruit et des vibrations quand elle est amenée au contact avec le sol à chaque tour de roue, en cas de roulage à plat. Pour éviter que ce bruit et ces vibrations deviennent énervants et gênants pour le conducteur, on peut fixer la barrette 48 sur la surface externe de la bande de roulement du dispositif en utilisant une colle à froid ayant une faible tenue à chaud et qui va donc se liquéfier pour permettre l'arrachement de la barrette 48 après quelques kilomètres de roulage à plat.

Bien entendu, pour améliorer l'équilibrage de la roue, on peut prévoir deux barrettes 48 diamétralement opposées sur chaque dispositif selon l'invention.

Cette ou ces barrettes 48 servent également à signaler au conducteur un sous-gonflage du pneumatique, susceptible de se traduire par un éclatement ou un déchaussage du pneumatique.

Selon encore une autre caractéristique de l'invention, représentée en figure 12, le secteur ou demi-anneau 10 comprend un rebord périphérique extérieur 50 orienté vers le flanc extérieur 52 du pneumatique 28 (ce flanc se trouvant côté extérieur du véhicule alors que le flanc opposé 54 est vers l'intérieur du véhicule), ledit rebord s'étendant vers le flanc 52 dans une direction parallèle à l'axe de la roue et venant sensiblement jusqu'à hauteur d'un bossage 56 formé sur la jante 30 à l'extrémité du siège 58 recevant le talon extérieur 60 du pneumatique.

Le secteur ou demi-anneau 10 de la figure 12 est dissymétrique par rapport au plan transversal médian 62 de la jante, et a sensiblement une section en L.

Le rebord périphérique 50, recouvert par la couche d'élastomère 44, forme une butée qui limite les déplacements du flanc 52 du pneumatique vers l'intérieur et qui empêche le déchaussage du pneumatique (talon 60 glissant hors du siège 58) et donc la perte de mobilité du véhicule, en cas de roulage à plat ou en sous-gonflage.

Egalement, cette limitation du déplacement vers l'intérieur du flanc 52 du pneumatique se traduit par la suppression d'une sensation de déplacement du véhicule sur terrain glissant, comme de la glace par exemple, que l'on pourrait ressentir en roulage à plat si cette limitation n'était pas prévue.

L'autre flanc du secteur ou demi-anneau 10 peut être plat et dépourvu de rebord périphérique comme représenté en figure 12, dans la mesure où l'expérience a permis de constater que le déchaussage d'un pneumatique commence toujours du côté extérieur et jamais du côté intérieur du pneumatique.

La figure 13 représente des moyens de freinage de l'ensemble vis-écrou utilisé pour réunir les extrémités en regard de l'anneau ou de deux secteurs ou demi-anneaux 10. On retrouve en figure 13 les écrous 38, la tige filetée 40 et l'écrou d'entraînement 42 représentés en figure 6, les moyens de freinage, destinés à empêcher la rotation de la tige 40 dans les écrous 38 après serrage, comprenant un fil 64 en acier qui est passé dans un canal traversant de l'écrou d'entraînement 42, pour former un boucle dont les deux brins sont torsadés comme représenté en 66, l'un de ces brins étant ensuite passé dans un trou traversant d'un écrou 38 et l'autre brin passant à l'extérieur de cet écrou, les deux extrémités des brins étant ensuite torsadées comme représenté en 68.

Ce système de freinage d'écrou est simple et efficace.

De façon générale, le dispositif selon l'invention a l'avantage d'être de fabrication et de structure simples et peu coûteuses et de pouvoir être monté rapidement et sans outils spécifiques sur la jante d'une roue.

## Revendications

1. Dispositif de roulage à plat pour véhicule automobile, tel en particulier qu'un véhicule de tourisme, dont les roues sont équipées de pneumatiques sans chambre à air, ce dispositif comprenant pour chaque roue un anneau rigide constitué d'un ou de plusieurs secteurs (10) en arc de cercle dont les extrémités sont raccordées bout à bout par des moyens de liaison et de serrage sur la jante de la roue et comprenant un rebord périphérique (50) s'étendant vers le flanc extérieur (52) du pneumatique sur une distance suffisante pour former une butée s'opposant au déchaussage du pneumatique en cas de roulage à plat ou avec un pneumatique insuffisamment gonflé, caractérisé en ce que le ou chaque secteur (10) est une pièce pleine et monobloc réalisée en résine thermoplastique armée ayant un coefficient de dilatation thermique sensiblement égal à celui de la jante (30), et dont la base (14) appliquée sur la jante comporte un rebord annulaire (16) dont la forme correspond à celle d'un puits ou d'un creux de jante (36), de sorte que le serrage de l'anneau sur la jante assure également son maintien en direction axiale.

2. Dispositif selon la revendication 1, caractérisé en ce que le ou chaque secteur (10) a une forme dissymétrique par rapport au plan transversal médian (62) de la jante (30 et a en section sensiblement une forme de L.

3. Dispositif selon la revendication 1 ou 2, caractérisé en ce qu'il est essentiellement constitué d'un anneau fendu en un point de sa périphérie.

4. Dispositif selon la revendications 1 ou 2, caractérisé en ce qu'il est constitué de deux demi-anneaux (10) ayant chacun une étendue angulaire de 180°, raccordés bout à bout par des moyens de serrage du type vis (40) - écrou (38) associés à des moyens (64) de freinage d'écrou.

5. Dispositif selon l'une des revendications 1 à 4, caractérisé en ce que chaque secteur ou demi-anneau comporte à ses extrémités une chambre (24) de réception et de blocage d'un écrou (38), et un passage (20) de réception d'une tige filetée (40), débouchant sur une face d'extrémité (22) du demi-anneau et traversant la chambre (24) précitée.

6. Dispositif selon l'une des revendications précédentes, caractérisé en ce que chaque secteur (10) est à section évolutive, l'épaisseur de la partie médiane (18) de sa section étant plus importante aux extrémités du secteur ou du demi-anneau.

7. Dispositif selon l'une des revendications précédentes, caractérisé en ce que chaque secteur (10) est réalisé par moulage en polyamide chargé de fibres de verre longues, le polyamide étant par exemple celui commercialisé sous la marque NYRIM.

8. Dispositif selon l'une des revendications précédentes, caractérisé en ce que la hauteur (ou dimension radiale) de chaque secteur (10) est égale à au moins 45%, et par exemple à 50% de la hauteur interne nominale du pneumatique (28).

9. Dispositif selon l'une des revendications 1 à 7, caractérisé en ce que la surface périphérique radialement externe de chaque secteur (10) comprend une couche surmoulée (44) d'élastomère.

10. Dispositif selon la revendication 9, caractérisé en ce que la hauteur (ou dimension radiale) de chaque secteur (10) est égale à 52% environ de la hauteur nominale interne du pneumatique (28).

11. Dispositif selon la revendication 9 ou 10, caractérisé en ce que l'élastomère est un polyisoprène ayant une dureté Shore A d'environ 70.

12. Dispositif selon l'une des revendications précédentes, caractérisé en ce que la surface périphérique externe de l'anneau comporte au moins un élément rapporté (48) en saillie, fixé par exemple au moyen d'une colle ayant une faible tenue à chaud.

13. Dispositif selon l'une des revendications précédentes, caractérisé en ce que la surface interne (46) de chaque pneumatique (28) comporte, en regard de la surface périphérique externe de l'anneau, une couche de lubrifiant, par exemple sous forme d'un gel très visqueux ayant un point de fusion très élevé.

## Claims

1. A device for running on a flat tire for a motor vehicle having wheels fitted with tubeless tires, in particular a vehicle such as a private vehicle, the device comprising, for each wheel, a rigid ring constituted by one or more circularly arcuate sectors (10) whose ends are connected together end-to-end on the wheel rim by linking and clamping means, and comprising a peripheral shoulder (50) extending towards the outer side wall (52) of the tire over a distance that is sufficient to constitute an abutment that impedes tearing off of the tire in the event of running on a tire that is flat or insufficiently inflated, the device being characterized in that the, or each, sector (10) is a solid or single-piece part made of reinforced thermoplastic resin having a coefficient of thermal expansion substantially equal to that of the rim (30), and whose base (14) applied against the rim includes an annular foot (16) whose shape corresponds to that of a well or drop center of the rim (36), such that clamping the ring on the rim also serves to lock it in place in an axial direction.

2. A device according to claim 1, characterized in that the, or each, sector (10) is asymmetrical in shape about a middle transverse plane (62) of the rim (30) and has a section that is substantially L-shaped.

3. A device according to claim 1 or 2, characterized in that it is essentially constituted by a ring that is split at one point on its periphery.

4. A device according to claim 1 or 2, characterized in that it is constituted by two half-rings (10) each extending over an angle of 180°, which half-rings are connected together end to end by screw (40) and nut (38) type clamping means associated with nut locking means (64).

5. A device according to any one of claims 1 to 4, characterized in that each sector or half-ring has a chamber (24) at each end for receiving a nut (38) and for preventing it from rotating, together with a passage (20) for receiving a threaded rod (40) opening out through an end face (22) of the half-ring and passing through the above-specified chamber (24).

6. A device according to any preceding claim, characterized in that each sector (10) is of varying section, the thickness of the middle portion (18) of its section being greater at the ends of the sector or of the half-ring.

7. A device according to any preceding claim, characterized in that each sector (10) is made by molding polyamide reinforced with long glass fibers, the polyamide being, for example, that sold under the trademark NYRIM.

8. A device according to any preceding claim, characterized in that the height [or radial size] of each sector (10) is equal to not less 45%, and for example 50% of the nominal inside height of the tire (28).

9. A device according to any one of claims 1 to 7, characterized in that the radially outer peripheral surface of each sector (10) includes an overmolded layer (44) of elastomer.

10. A device according to claim 9, characterized in that the height [or radial size] of each sector (10) is equal to about 52% of the nominal inside height of the tire (28).

11. A device according to claim 9 or 10, characterized in that the elastomer is a polyisoprene whose hardness is about 70 on the Shore A scale.

12. A device according to any preceding claim, characterized in that the outer peripheral surface of the ring includes at least one outwardly projecting element (48), e.g. fixed thereon by means of an adhesive having poor high temperature performance.

13. A device according to any preceding claim, characterized in that the inside surface (46) of each tire (28) includes, facing the outer peripheral surface of the ring, a layer of lubricant, e.g. in the form of a very viscous gel having a melting point that is very high.

## Patentansprüche

1. Einrichtung zum platten Fahren für ein Kraftfahrzeug, wie insbesondere ein Touristenfahrzeug, dessen Räder mit schlauchlosen Reifen ausgerüstet sind, wobei diese Einrichtung für jedes Rad einen starren Ring umfaßt, der von einem oder mehreren Abschnitten (10) in Kreisbogenform gebildet ist, dessen bzw. deren Enden Ende-an-Ende durch Verbindungs- und Befestigungsmittel auf der Felge des Rads verbunden bzw. zusammengefügt sind und einen Umfangsrand (50) haben, der sich nach der äußeren Flanke (52) des Reifens zu über eine Strecke erstreckt, die genügend ist, um einen Anschlag zu bilden, welcher dem Abstreifen des Reifens im Fall des platten Fahrens oder des Fahrens mit einem ungenügend aufgepumpten Reifen entgegenwirkt, dadurch **gekennzeichnet,** daß der oder jeder Abschnitt (10) ein volles bzw. vollwandiges und einstückiges Teil ist, das aus armiertem bzw. verstärktem thermoplastischen Harz hergestellt ist, welches einen Wärmeausdehnungskoeffizienten hat, der im wesentlichen gleich jenem der Felge (30) ist, und dessen auf die Felge aufgebrachte bzw. -gelegte Basis (14) einen ringförmigen Rand bzw. Vorsprung (16) hat, dessen Form derjenigen eines Felgenschachts oder einer Felgenvertiefung (36) entspricht, derart, daß die Befestigung des Rings auf der Felge gleichzeitig seine Aufrechterhaltung in Axialrichtung sicherstellt.

2. Einrichtung gemäß dem Anspruch 1, dadurch **gekennzeichnet,** daß der oder jeder Abschnitt (10) eine asymmetrische Form mit Bezug auf die Quermittelebene (62) der Felge (30) hat und im Querschnitt im wesentlichen eine L-Form hat.

3. Einrichtung gemäß dem Anspruch 1 oder 2, dadurch **gekennzeichnet,** daß sie im wesentlichen von einem Ring gebildet ist, der an einer Stelle seines Umfangs aufgespalten bzw. zerteilt ist.

4. Einrichtung gemäß den Ansprüchen 1 oder 2, dadurch **gekennzeichnet,** daß sie von zwei Halbringen (10) gebildet ist, von denen jeder eine Winkelerstreckung von 180° hat, welche Ende-an-Ende durch Befestigungsmittel des Typs Schraube (40) - Mutter (38), verbunden mit Mitteln (64) zur Hemmung der Mutter, zusammengefügt sind.

5. Einrichtung gemäß einem der Ansprüche 1 bis 4, dadurch **gekennzeichnet,** daß jeder Abschnitt oder Halbring an seinen Enden eine Kammer (24) für die Aufnahme und die Blockierung einer Mutter (38) hat, und einen Durchgang (20) für die Aufnahme einer Gewindestange bzw. eines Gewindeschafts (40), welcher auf einer Endseite (22) des Halbrings herauskommt und die vorgenannte Kammer (24) durchsetzt.

6. Einrichtung gemäß einem der vorhergehenden Ansprüche, dadurch **gekennzeichnet,** daß jeder Abschnitt (10) einen sich ändernden Querschnitt hat, wobei die Dicke des mittleren Teils (18) seines Querschnitts beträchtlicher an den Enden des Abschnitts oder des Halbrings ist.

7. Einrichtung gemäß einem der vorhergehende Ansprüche, dadurch **gekennzeichnet,** daß jeder Abschnitt (10) durch Formung aus mit langen Glasfasern beladenem Polyamid hergestellt ist, wobei das Polyamid z.B. jenes ist, welches unter der Marke NYRIM vertrieben wird.

8. Einrichtung gemäß einem der vorhergehenden Ansprüche, dadurch **gekennzeichnet,** daß die Höhe (oder Radialdimension) jedes Abschnitts (10) wenigstens gleich 45%, und z.B. 50%, der nominellen inneren Höhe des Reifens (28) ist.

9. Einrichtung gemäß einem der Ansprüche 1 bis 7, dadurch **gekennzeichnet,** daß die radial äußere Umfangsoberfläche jedes Abschnitts (10) eine übergeformte Schicht (44) aus Elastomer umfaßt.

10. Einrichtung gemäß Anspruch 9, dadurch **gekennzeichnet,** daß die Höhe (oder Radialdimension) jedes Abschnitts (10) ungefähr gleich 52% der nominellen inneren Höhe des Reifens (28) ist.

11. Einrichtung gemäß Anspruch 9 oder 10, dadurch **gekennzeichnet,** daß das Elastomer ein Polyisopren ist, das eine Shore-Härte A von ungefährt 70 hat.

12. Einrichtung gemäß einem der vorhergehenden Ansprüche, dadurch **gekennzeichnet,** daß die äußere Umfangsoberfläche des Rings wenigstens ein als Vorsprung aufgesetztes Element (48) hat, das z.B. mittels eines Klebstoffs befestigt ist, der eine schwache Warmfestigkeit hat.

13. Einrichtung gemäß einem der vorhergehenden Ansprüche, dadurch **gekennzeichnet,** daß die innere Oberfläche (46) von jedem Reifen (28) gegenüber der äußeren Umfangsoberfläche des Rings eine Schmiermittelschicht hat, z.B. in der Form eines sehr viskosen Gels, das einen sehr erhöhten Schmelzpunkt hat.
